# EUROPÄISCHE PATENTANMELDUNG

(11) **EP 4 803 589 A1**
(43) Veröffentlichungstag der Anmeldung: **09.09.2026**
(21) Anmeldenummer: 26160398.9
(22) Anmeldetag: 22.04.2022
(51) Int. Cl.: C09J 175/08, C08F 220/14, C08F 220/18, C08F 230/08, C08G 18/10, C08G 18/48, C08G 18/76, C09D 143/04, C09J 175/04

(54) **POLYMERISATION EINES SILANMODIFIZIERTEN, DURCH RADIKALISCHE KETTENPOLYMERISATION GEBILDETEN POLYMERS IN EINEM POLYOL ODER IN EINEM PREPOLYMER MIT ENDSTÄNDIGEN ISOCYANATGRUPPEN UND DESSEN EINSATZ IN POLYURETHAN-FORMULIERUNGEN**

(30) Priorität: 23.04.2021 DE 102021110428; 23.07.2021 DE 102021119133
(62) Dokumentnummer(n) der früheren Anmeldung(en) nach Art. 76 EPÜ: 22724099.1 / 4 326 795
(71) Anmelder: Follmann GmbH & Co. KG, 32423 Minden (DE)
(72) Erfinder: KLEMUSCH, Anton, 32423 Minden (DE); ZWEIGERT, Christine, 32423 Minden (DE)
(74) Vertreter: FARAGO Patentanwälte GmbH

(57) **Zusammenfassung**

Die vorliegende Erfindung betrifft ein Acrylat-Copolymer.

Die vorliegende Offenbarung betrifft ein Verfahren zur Herstellung einer PolymerZusammensetzung, bei dem ein silanmodifiziertes Ethylen-basiertes Polymer, das bevorzugt ein silanmodifiziertes Acrylatpolymer ist, in einem Polyol oder in einem Prepolymer mit endständigen Isocyanatgruppen polymerisiert wird und eine durch dieses Verfahren hergestellte Polymerzusammensetzung. Die Offenbarung betrifft weiterhin ein Verfahren zur Herstellung einer feuchtigkeitshärtenden Polyurethan-Schmelzklebstoffzusammensetzung und eines 1K-Polyurethanklebstoff basierend auf der offenbarungsgemäßen Polymerzusammensetzung nebst der damit hergestellten feuchtigkeitshärtenden Polyurethan-Schmelzklebstoffzusammensetzung und dem 1K-Polyurethanklebstoff.

## Beschreibung

Die vorliegende Erfindung betrifft ein Verfahren zur Herstellung einer PolymerZusammensetzung, bei dem ein silanmodifiziertes Polymer durch radikalische Kettenpolymerisation mit ethylenisch ungesättigten Monomeren in einem Polyol oder in einem Prepolymer mit endständigen Isocyanatgruppen polymerisiert wird und eine durch dieses Verfahren hergestellte Polymerzusammensetzung. Die Erfindung betrifft weiterhin ein Verfahren zur Herstellung einer feuchtigkeitshärtenden Polyurethan-Schmelzklebstoffzusammensetzung und eines 1K-Polyurethanklebstoff, basierend auf der erfindungsgemäßen Polymerzusammensetzung nebst der damit hergestellten feuchtigkeitshärtenden Polyurethan-Schmelzklebstoffzusammensetzung und dem 1K-Polyurethanklebstoff.

### Hintergrund der Erfindung

Klebstoffe benötigen je nach Anwendung z.B. eine lange offene Zeit, da das Fügen oft manuell erfolgt. Gleichzeitig wird ein schneller Festigkeitsaufbau nach dem Fügen benötigt, da die Fügeteile schnellstmöglich weiterverarbeitet werden sollen. Dieses gegensätzliche Eigenschaftsprofil wird bei Polyurethanklebstoffen beispielsweise dadurch gelöst, dass ein Acrylatpolymer in Pulverform in einem polyetherbasierten Polyurethan eingesetzt wird. Letzteres ermöglicht eine lange offene Zeit, während das Acrylatpolymer für einen hohen Anfangstack sorgt. Die Einarbeitung der Acrylate ist oftmals problematisch, da diese viel Luft eintragen und sich nur schwer lösen. Dies kann dadurch gelöst werden, indem die Acrylatpolymere direkt in einem Polyol polymerisiert werden, welches anschließend zum Polyurethan umgesetzt wird. Dieses Verfahren ermöglicht auch den Einsatz von Acrylatpolymeren, deren Glasübergangstemperatur unterhalb der Raumtemperatur liegen. Weiterhin lassen sich diese beliebig mit Co-Monomeren modifizieren. Die Eigenschaften der Klebstoffe sind jedoch limitiert, da das Acrylatpolymer ein Thermoplast ist, welches bei höheren Temperaturen erweicht oder teilweise eine geringere Beständigkeit gegenüber bestimmten Chemikalien aufweist.

Zusammenfassend wird die Beständigkeit von reaktiven Klebstoffen gegenüber Temperatur und bestimmter Chemikalien durch den Einsatz von thermoplastischen Materialien, wie z.B. Acrylatpolymere, verschlechtert. Darüber hinaus führen Verklebungen von anorganischen Materialien ohne Oberflächenbehandlung mit Polyurethanklebstoffen zu Adhäsionsproblemen.

Die US 5,021,507 A betrifft Acryl-modifizierte reaktive Urethane und lehrt in Spalte 2, Zeilen 58 bis 68, dass es bei ethylenisch ungesättigten Monomeren mit feuchtigkeits-reaktiven funktionellen Gruppen ("moisture reactive functional groups") erforderlich ist, dass die Monomere erst nach der Bildung des Prepolymers hinzugegeben werden und dann erst mittels radikalischer Polymerisation polymerisieren.

Weiterer Stand der Technik kann der US 5,018,337, der WO 2016/123418 A1 oder der WO 01/81495 A2 entnommen werden.

Der vorliegenden Erfindung liegt die Aufgabe zugrunde, den Stand der Technik zu verbessern oder eine Alternative zu bieten.

### Zusammenfassung der Erfindung

Nach einem ersten Aspekt der vorliegenden Erfindung, löst die gestellte Aufgabe ein Verfahren zur Herstellung einer Polymerzusammensetzung gemäß Anspruch 1. Weitere Ausführungsformen sind Gegenstand der weiteren unabhängigen und abhängigen Ansprüche.

In einem ersten Aspekt betrifft die Erfindung ein Verfahren zur Herstellung einer PolymerZusammensetzung, wobei das Verfahren die folgenden Schritte umfasst:
a) Kombinieren von:
   (i) einem Polyol oder einem Prepolymer mit endständigen Isocyanat (NCO)-Gruppen mit
   (ii) einem ethylenisch ungesättigten, keinen aktiven Wasserstoff enthaltenden Monomer, das keine feuchtigkeitsreaktiven funktionellen Gruppen aufweist (Monomertyp A), und
   (iii) einem ethylenisch ungesättigten, keinen aktiven Wasserstoff enthaltenden Monomer, das eine feuchtigkeitsreaktive funktionelle Gruppe aufweist (Monomertyp B);
b) Polymerisieren der Mischung aus Schritt a) unter Anwendung eines Radikalpolymerisationsverfahren mit einem Kettenübertragungsmittel zur Erzielung eines niedrigmolekularen Polymers;
c) optionale Erwärmung der Mischung aus Schritt b) auf eine Temperatur von 100°C bis 160°C für 10 bis 60 Minuten zur teilweisen Vernetzung des Polyols oder des Prepolymers mit endständigen NCO-Gruppen mit dem niedrigmolekularen Polymer.

Begrifflich sei hierzu folgendes erläutert:
Die ethylenisch ungesättigte Gruppe erlaubt die radikalische Polymerisation der Monomere zu einem Polymer. Durch die Abwesenheit von aktivem Wasserstoff in den Monomeren wird gewährleistet, dass die Monomere nicht an der anschließenden Additionsreaktion zur Ausbildung des Polyurethans teilnehmen. Der Monomertyp A trägt zum Aufbau der Polymerkette bei, der Monomertyp B erlaubt durch die feuchtigkeitsreaktive Gruppe eine Reaktion mit dem Polyol oder den Isocyanatgruppen des Prepolymers, mit den feuchtigkeitsreaktiven Gruppen des Polymers oder in der Anwendung, wie beispielsweise mit anorganischen Substraten zur Verbesserung der Adhäsion auf diesen Substraten.

Das erfindungsgemäße mittels Monomeren mit ethylenisch ungesättigten Gruppen hergestellten Polymer, das bevorzugt ein Acrylatpolymer ist, wird im Folgenden auch kurz als Ethylen-basiertes Polymer bezeichnet.

Durch die Modifikation des Ethylen-basierten Polymers, das bevorzugt ein Acrylatpolymer ist, mit Silanen können diese nach der Applikation mit Feuchtigkeit reagieren und werden dadurch vernetzt. Dies führt zu einer Steigerung der Beständigkeit gegenüber Wärme und bestimmten Chemikalien. Zusätzlich reagieren Silane mit anorganischen Materialien, wie z.B. Glas oder Metall, und erhöhen dadurch die Verbundhaftung zu diesen. Dadurch lässt sich auch das Einsatzgebiet dieser Klebstoffe ausweiten. Unter der Einwirkung von zusätzlicher Wärme kann die Vernetzung beschleunigt werden und es bildet sich dabei bereits ein dauerklebriger Haftpolymerfilm. Darüber hinaus ist insbesondere auch die Herstellung von reaktiven Klebstoffen möglich, die keine monomeren Isocyanate enthalten und somit kennzeichnungsfrei sind. Dies ermöglicht einen sicheren Umgang mit den Klebstoffen und erfordert bei der Verwendung keine aufwendigen Maßnahmen.

Die Polymere können eingesetzt werden für Klebstoffe, Dichtstoffe und Beschichtungen, reaktive Haftschmelzklebstoffe, Textilklebstoffe, Klebstoffe für den Holz & Möbel Bereich, Automotive Klebstoffe, Klebstoffe im Baubereich, flüssige 1-K Klebstoffe, Dichtstoffe, Primer und Beschichtungen.

Der technische Grundgedanke der Erfindung basiert auf der Modifikation von Ethylen-basierten Polymeren und insbesondere Acrylatpolymeren mit Silanen, um das Eigenschaftsprofil zu verbessern. Mögliche Verbesserungen können folgende sein:
- Erhöhung der Temperaturbeständigkeit durch die Vernetzung der Silane.
- Eine Reaktion der Silane mit anorganischen Substraten, um die Adhäsion auf diesen zu verbessern.
- Mögliche Herstellung von Produkten mit Isocyanat-Monomerkonzentrationen unter 0.1 %, welche dadurch kennzeichnungsfrei sind.

Die Erfindung weist mehrere Vorteile gegenüber dem Stand der Technik auf. Thermoplastische Acrylatpolymere werden in reaktive Polymere umgewandelt, die durch Feuchtigkeit zu Duroplasten ausreagieren und dadurch höhere Beständigkeit gegenüber Wärme und spezieller Chemikalien aufweisen. Da die Silangruppen statistisch über das Polymer verteilt sind und nicht nur endständig, wie es bei Polyadditionsprodukten bzw. nachfolgender Silanisierung der Fall ist, ist die Vernetzungsdichte und damit die Beständigkeit des Materials erhöht. Silane bieten zudem die Möglichkeit mit anorganischen Materialien wie Glas oder Metallen reagieren zu können, um dadurch die Verbundfestigkeit zu diesen Materialien zu erhöhen, was das Adhäsionsspektrum erweitert oder die Verbindung von anorganischen Materialien mit organischen Materialien wie z.B. Kunstoffen ermöglicht. Weiterhin bieten sich drei Syntheserouten, welche auch die Herstellung von Materialien ohne Isocyanat-Monomere ermöglicht. Dadurch sind diese Produkte kennzeichnungsfrei und unterliegen keinen Einschränkungen.

Die vorliegende Polymerzusammensetzung kann als neuartiges Zwischenprodukt für die Herstellung verschiedener Polurethane verwendet werden. Es ergeben sich insbesondere folgende Möglichkeiten:
- Herstellung eines silanmodifizierten Ethylen-basierten Polymers (bevorzugt als Acrylatpolymer) in einem Polyol oder in einem Prepolymer mit endständigen NCO-Gruppen, mit anschließender Umsetzung des Polyols oder des Prepolymers mit endständigen NCO-Gruppen zu einem thermoplastischen Polyurethan.
- Herstellung eines silanmodifizierten Ethylen-basierten Polymers (bevorzugt als Acrylatpolymer) in einem Polyol oder in einem Prepolymer mit endständigen NCO-Gruppen, mit anschließender Umsetzung des Polyols oder des Prepolymers mit endständigen NCO-Gruppen zu einem reaktiven Polyurethan.
- Herstellung eines silanmodifizierten Ethylen-basierten Polymers (bevorzugt als Acrylatpolymer) in einem Polyol oder in einem Prepolymer mit endständigen NCO-Gruppen, mit anschließender Umsetzung des Polyols oder des Prepolymers mit endständigen NCO-Gruppen zu einem reaktiven Polyurethan, welches daraufhin mit Aminosilanen oder Mercaptosilanen zu einem silanterminiertem Polyurethan umgesetzt wird.

### Die Erfindung im Einzelnen

Die erfindungsgemäße Polymerisation des Monomertyps A mit dem Monomertyp B wird im Allgemeinen so durchgeführt, dass man alle Monomeren zusammen in das Reaktionsgefäß bringt und sie regellos nach ihren relativen Konzentrationen und relativen Reaktionsfähigkeiten reagieren lässt, so dass statistische Polymerisate gebildet werden. Zur Vergrößerung oder Verringerung der Uneinheitlichkeit der Polymerisate kann jedoch auch eines oder mehrere der ethylenisch ungesättigten Monomere im Verlauf der Polymerisation zudosiert werden.

Es ist denkbar, dass die Monomere gemäß Monomertyp A und Monomertyp B stufenweise hinzugegeben werden, so dass die Radikalpolymerisation nach Zugabe eines definierten Gemisches aus Monomertyp A und Monomertyp B gestartet wird und erst nach Polymerbildung, die mit einem nahezu vollständigen Verbrauch der Monomere einhergeht, dann erneut ein definiertes Gemisch aus Monomertyp A und Monomertyp B dem Reaktionsansatz hinzugegeben werden. Durch eine stufenweise Zugabe wird eine Überhitzung des Reaktionsansatzes aufgrund der exotherm verlaufenden Polymerisationsreaktion verhindert.

Das Radikalpolymerisationsverfahren erfolgt bevorzugt bei einer Temperatur von weniger als 100°C, weiterhin bevorzugt bei einer Temperatur von 40 bis 95°C und besonders bevorzugt bei einer Temperatur von 80 bis 90°C.

Es ist hierbei bevorzugt, wenn das im ersten Schritt definierte Gewichtsverhältnis aus Monomertyp A und Monomertyp B auch bei der zweiten Zugabe erhalten bleibt.

Es ist weiterhin denkbar, dass die Menge an Monomertyp A im zweiten Schritt größer ist als die Menge an Monomertyp A bei der ersten Zugabe. Bevorzugt beträgt das Mengenverhältnis Monomertyp A _{Erste Zugabe} zu Monomertyp A _{Zweite Zugabe} zwischen 1:1 und 1:10, weiterhin bevorzugt zwischen 1:2 und 1:8 und insbesondere zwischen 1:3 und 1:7.

Entsprechend ist denkbar, dass die Menge an Monomertyp B im zweiten Schritt größer ist als die Menge an Monomertyp B bei der ersten Zugabe. Bevorzugt beträgt das Mengenverhältnis Monomertyp B _{Erste Zugabe} zu Monomertyp B _{Zweite Zugabe} zwischen 1:1 und 1:10, weiterhin bevorzugt zwischen 1:2 und 1:8 und insbesondere zwischen 1:35 und 1:7.

Im optionalen Schritt (c) des Verfahrens wird die Mischung aus Schritt b), die das niedrigmolekulare Polymer als Ergebnis der Radikalpolymerisation enthält, so erhitzt, dass es zur teilweisen Vernetzung des Polyols oder des Prepolymers mit endständigen NCO-Gruppen mit dem niedrigmolekularen Polymer kommt. Das niedrigmolekulare Polymer kann aufgrund seiner feuchtigkeitsreaktiven Gruppen mit den Hydroxylgruppen des Polyols oder den Isocyanatgruppen des Prepolymers reagieren. Diese Reaktion führt zu einer Polymerzusammensetzung mit einer erhöhten Temperaturbeständigkeit.

Im optionalen Schritt (c) können alternativ oder zusätzlich auch die Silangruppen untereinander reagieren. Auch diese Reaktion für zu einer Polymerzusammensetzung mit einer erhöhten Temperaturbeständigkeit.

Erfindungsgemäß wird bei dem Verfahren zur Herstellung der Polymerzusammensetzung ein Polyol oder ein Prepolymer mit endständigen NCO-Gruppen eingesetzt.

Dies ist so bezüglich des Polyols so zu verstehen, dass hier mindestens ein Polyol eingesetzt werden kann, also auch zwei, drei, vier oder noch mehr Polyole. Bevorzugterweise wird im Verfahren genau ein Polyol eingesetzt.

Zweckmäßigerweise hat das bei dem erfindungsgemäßen Verfahren eingesetzte Polyol einen Wassergehalt von maximal 0,1 Gew.% und bevorzugt von maximal 0,05 Gew.%.

Geeignete Polyole sind ausgewählt aus der Gruppe bestehend aus Polyester, Hydroxylgruppen-haltiges Polycaprolacton, Polyoxyalkylenpolyol (synonym zu dem Begriff "Polyglycol"), monosubstituierter Glykolester, Polythioether, Polyamid, Polyesteramid, Polycarbonat, Polyacetal, Polykohlenwasserstoffpolyol, Polyacrylatpolyol, Polymethacrylatpolyol, Polyalkohol, Bisphenol, Polycarbonatpolyol, polyhydroxyfunktionelle Fette und Öle und Mischungen hiervon.

Besonders geeignet sind Diole, Polyethylenoxide oder Polypropylenoxide.

Als Polyole eignen sich einerseits bereits genannte hochmolekulare Polyoxyalkylenpolyole, bevorzugt Polyethylenoxide oder Polyoxypropylendiole mit einem Ungesättigtheitsgrad tiefer als 0.02 mEq/g und mit einem Molekulargewicht im Bereich von 400 bis 18.000 g/mol, insbesondere solche mit einem Molekulargewicht im Bereich von 1.000 bis 4.000 g/mol. Besonders geeignet sind PPG 2000 oder PPG 4000.

Zur Erreichung einer höheren Vernetzungsdichte können darüber hinaus auch höherwertige Alkohole wie Triole und Tetraole eingesetzt werden. Beispielhaft sind hier Glycerin, Trimethylolpropan oder Pentaerythrit genannt.

Geeignet sind auch Polyoxyalkylenpolyole, die auch Polyetherpolyole, Polyglycole oder Oligoetherole genannt werden. Hierbei handelt es sich um Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit einer oder mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A,1,1,1-Trimethylolethan, 1,1,1-Trimethylolpropan, Glycerin, Anilin, sowie Mischungen der vorgenannten Verbindungen.

Als Polyesterpolyole sind besonders jene geeignet, die hergestellt werden aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

Denkbar ist auch der Einsatz von Polycarbonatpolyolen, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Geeignet sind zudem polyhydroxyfunktionelle Fette und Öle, beispielsweise natürliche Fette und Öle, insbesondere Rizinusöl; oder durch chemische Modifizierung von natürlichen Fetten und Ölen gewonnene - sogenannte oleochemische - Polyole, beispielsweise die durch Epoxidierung ungesättigter Öle und anschließender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschließender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Es ist auch denkbar Polykohlenwasserstoffpolyole einzusetzen. Diese werde auch Oligohydrocarbonole genannt, und umfassen beispielsweise polyhydroxyfunktionelle Polyolefine, Polyisobutylene, Polyisoprene; polyhydroxyfunktionelle Ethylen-Propylen-, Ethylen-Butylen- oder Ethylen- Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren sowie hydrierte polyhydroxyfunktionelle Polymere oder Copolymere von Dienen.

Zusätzlich zu diesen genannten Polyolen können kleine Mengen von niedrigmolekularen zwei- oder mehrwertigen Alkoholen wie beispielsweise 1,2- Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Isocyanatgruppen aufweisenden Polyurethanpolymers mitverwendet werden.

Es ist auch denkbar, dass zusätzlich zu diesen genannten Polyolen kleine Mengen von niedrigmolekularen zwei- oder mehrwertigen Aminen wie Ethylendiamin, Toluoldiamin (TDA), Diaminodiphenylmethan (DADPM) und Polymethylen-Polyphenylenamin; oder auch Aminoalkohole wie Ethanolamin und Diethanolamin, sowie Mischungen der vorgenannten Amine und Aminoalkohole bei der Herstellung des Isocyanatgruppen aufweisenden Polyurethanpolymers mitverwendet werden können.

Bei dem Verfahren zur Herstellung der Polymerzusammensetzung kann auch ein Prepolymer mit endständigen NCO-Gruppen eingesetzt werden. Dies ist so zu verstehen, dass hier mindestens ein entsprechendes Prepolymer eingesetzt werden kann, also auch zwei, drei, vier oder noch mehr Prepolymere. Bevorzugterweise wird im Verfahren genau ein Prepolymer mit endständigen NCO-Gruppen eingesetzt.

Gemäß einem Vorteil kann vorgesehen sein, dass das Prepolymer mit endständigen NCO-Gruppen ein molares Verhältnis von NCO- zu OH-Gruppen von zwischen 1,5 zu 1 und 2,0 zu 1 aufweist.

In einer Ausführungsform wird das Prepolymer mit endständigen NCO-Gruppen durch Reaktion eines Diols mit Diisocyanat hergestellt.

Geeignete Polyole sind ausgewählt aus der Gruppe bestehend aus Polyester, Hydroxylgruppen-haltiges Polycaprolacton, Polyglycole, monosubstituierter Glykolester, Polythioether, Polyamid, Polyesteramid, Polycarbonat, Polyacetal, Polykohlenwasserstoffpolyol, Polyacrylatpolyol, Polymethacrylatpolyol, Polyalkohol, Bisphenol, Polycarbonatpolyol, polyhydroxyfunktionelle Fette und Öle und Mischungen hiervon.

Besonders geeignet sind Diole, Polyethylenoxide oder Polypropylenoxide.

Als Polyole eignen sich einerseits bereits genannte hochmolekulare Polyglycole, bevorzugt Polyethylenoxide oder Polyoxypropylendiole mit einem Ungesättigtheitsgrad tiefer als 0.02 mEq/g und mit einem Molekulargewicht im Bereich von 400 bis 18.000 g/mol, insbesondere solche mit einem Molekulargewicht im Bereich von 1.000 bis 4.000 g/mol. Besonders geeignet sind PPG 2000 oder PPG 4000.

Es kann hierbei auch ein Gemisch aus Polyolen eingesetzt werden. In vorteilhafter Weise ist dies ein Gemisch aus zwei oder mehr Polyethylenoxiden oder ein Gemisch aus zwei oder mehr Polyoxypropylendiolen. Besonders vorteilhaft ist hierbei ein Gemisch aus PPG1000 und PPG 400.

Für die Herstellung des Prepolymers mit endständigen Isocyanatgruppen können die dem Fachmann für die Herstellung von Polyurethanpolymeren geläufigen Diisocyanate verwendet werden.

Es kann weiter möglich sein, dass das Diisocyanat für diese Prepolymer-Synthese hierbei ausgewählt ist aus der Gruppe bestehend aus Ethylendiisocyanat, Ethylidendiisocyanat, Propylendiisocyanat, Butylendiisocyanat, Pentamethylendiisocyanat, Hexamethylendiisocyanat, Toluoldiisocyanat, Cyclopentylen-1,3-diisocyanat, Cyclohexylen-1,4-diisocyanat, Cyclohexylen-1,2-diisocyanat, 4,4'-Diphenylmethandiisocyanat, 2,4'-Diphenylmethan-diisocyanat, 2,2'-Diphenylmethan-diisocyanat, 4,4'-Diisocyanatodicyclohexylmethan, 2,2-Diphenylpropan-4,4'-diisocyanat, p-Phenylen-diisocyanat, m-Phenylen-diisocyanat, Xylylen-diisocyanat, 1,4-Naphthylen-diisocyanat, 1,5-Naphthylen-diisocyanat, Diphenyl-4,4' -diisocyanat, Azobenzol-4,4'-diisocyanat, Diphenylsulfon-4,4'-diisocyanat, Dichlorhexamethylen-diisocyanat, Furfuryliden-diisocyanat, 1-Chlorbenzol-2,4-diisocyanat, 1,3-bis(isocyanatomethyl)benzol, 1,3-bis(isocyanatomethyl)cyclohexan, Block-Diisocyanate und Carbodiimid-modifizierte Diisocyanate, sowie beliebige Mischungen der vorgenannten Diisocyanate. Bevorzugt werden hierbei die Diphenylmethandiisocyanate eingesetzt und besonders bevorzugt das 4,4'-Diphenylmethan-diisocyanat (4,4'-MDI).

Bei dem Radikalpolymerisationsverfahren kann ein Initiator verwendet wird, der ein Peroxidinitiator oder ein Azoinitiator ist. Bevorzugte Initiatoren sind Dilauroylperoxid, Dibenzoylperoxid und Azobis(isobutyronitril). Hierbei ist die Verwendung von Dilauroylperoxid bevorzugt.

Es ist auch denkbar, dass der Reaktionsmischung in dem erfindungsgemäßen Verfahren ein Hilfsstoff und/oder ein Zusatzstoff hinzugegeben wird. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band 7 "Polyurethane", Gerhard W. Becker und Dietrich Braun, Carl Hanser Verlag, München, Wien, 1993, entnommen werden.

Zur Einstellung der Viskosität kann der Reaktionsmischung zu jedem Zeitpunkt des erfindungsgemäßen Verfahrens auch ein Lösungsmittel zugesetzt werden. Bespiele für Lösungsmittel sind Triethylphosphat (TEP), Pentamethyldiethylentriamin (PMDETA), Triethylendiamin (TEDA), Monoethylenglycol, Polyethylenglycol und Propylencarbonat (PC); und Mischungen von zwei oder mehr der vorgenannten Lösungsmittel. Für den Fall, dass das Lösungsmittel ein Polyol ist, ist eine Zugabe nach Beendigung der Radikalpolymerisation vorteilhaft.

Zur Beschleunigung der Reaktion kann der Reaktionsmischung in dem erfindungsgemäßen Verfahren ein Katalysator hinzugegeben werden.

Beispielsweise sind geeignete Katalysatoren N,N-Dimethylethanolamin (DMEA), N,N-Dimethylcyclohexylamin (DMCHA), Bis(N,N-dimethylaminoethyl)ether (BDMAFE), N,N,N',N',N"-Pentamethyldiethylenetriamin (PDMAFE), 1,4-Diazadicyclo[2,2,2]octan (DABCO), 2-(2-Dimethylaminoethoxy)-ethanol (DMAFE), 2-((2-Dimethylaminoethoxy)-ethylmethyl-amino)ethanol, 1-(bis(3-Dimethylamino)-propyl)amino-2-propanol, N,N',N"-tris(3-Dimethylamino-propyl)hexahydrotriazin, Dimorpholinodiethylether (DMDEE), N.N-Dimethylbenzylamin, N,N,N',N",N"-Pentaamethyldipropylenetriamin, N,N'-Diethylpiperazin. Hierbei sind insbesondere, sterisch gehinderte primäre, sekundäre oder tertiäre Amine geeignet, wie beispielsweise Dicyclohexylmethylamin, Ethyldiisopropylamin, Dimethylcyclohexylamin, Dimethylisopropylamin, Methylisopropylbenzylamin, Methylcyclopentylbenzylamin, Isopropyl-sec-butyl-trifluoroethylamin, Diethyl-α-phenyethyl)amin, tris-n-Propylamin, Dicyclohexylamin, t-Butylisopropylamin, di-t-Butylamin, Cyclohexyl-t-butylamin, de-sec-Butylamine, Dicyclopentylamin, di-α-Trifluoromethylethyl)amin, di-(α-Phenylethyl)amin, Triphenylmethylamin, and 1,1,-Diethyln-Propylamin. Andere sterisch gehinderte Amine umfassen Morpholine, Imidazole, Ether-Verbindungen wie Dimorpholinodiethylether oder Dimorpholinodimethylether; N-Ethylmorpholin, N-Methylmorpholin, bis(Dimethylaminoethyl)ether, Imidizole, Nomethylimidazole, 1,2-Dimethylimidazole, N,N,N',N',N",N"-Pentamethyldiethylenetriamin, N,N,N',N',N",N"-Pentaethyldiethylentriamin, N,N,N',N',N",N"-Pentamethyldipropylentriamin, bis(Diethylaminoethyl)ether und bis(Dimethylaminopropyl)ether.

Erfindungsgemäß handelt es sich bei dem Monomertyp A um ein ethylenisch ungesättigtes, keinen aktiven Wasserstoff enthaltendes Monomer, das keine feuchtigkeitsreaktiven funktionellen Gruppen aufweist.

Erfindungsgemäß wird bei dem Verfahren zur Herstellung der Polymerzusammensetzung ein Monomer vom Monomertyp A eingesetzt. Dies ist so zu verstehen, dass hier mindestens ein Monomer dieses Typs eingesetzt werden kann, also auch zwei, drei, vier oder noch mehr Monomere vom Typ A. Bevorzugterweise werden im Verfahren zwei Monomere des Monomertyps A eingesetzt.

Beispiele für den Monomertyp A sind ausgewählt ist aus der Gruppe bestehend aus C1 bis C12 Ester der Acrylsäure oder Methacrylsäure wie Methylacrylat, Ethylacrylat, n-Butylacrylat, Methylmethacrylat, Ethylmethacrylat oder n-Butylmethacrylat, Vinylester wie Vinylacetat oder Vinylpropionat, Vinylether, Fumarate, Maleate, Styrole, Acrylnitrile, Ethylene, oder Mischungen hiervon.

Besonders geeignet ist als Monomertyp A das n-Butylmethacrylat oder Methylmethacrylat oder ein Gemisch hiervon.

Erfindungsgemäß handelt es sich bei dem Monomertyp B um ein ethylenisch ungesättigtes, keinen aktiven Wasserstoff enthaltendes Monomer, das eine feuchtigkeitsreaktive funktionelle Gruppe aufweist.

Erfindungsgemäß wird bei dem Verfahren zur Herstellung der Polymerzusammensetzung ein Monomer vom Monomertyp B eingesetzt. Dies ist so zu verstehen, dass hier mindestens ein Monomer dieses Typs eingesetzt werden kann, also auch zwei, drei, vier oder noch mehr Monomere vom Typ B. Bevorzugterweise werden im Verfahren genau ein Monomer des Monomertyps B eingesetzt.

Vorteilhaft ist es darüber hinaus, wenn im Rahmen der Erfindung der Monomertyp B ausgewählt ist aus der Gruppe bestehend aus Vinylverbindungen, Acrylaten, Methacrylaten, Fumarate, Maleate, Styrole, Acrylnitrile, Ethylene, oder Mischungen hiervon, wobei diese eine feuchtigkeitsreaktive funktionelle Gruppe aufweisen.

Eine geeignete feuchtigkeitsreaktive Gruppe ist die Isocyanatgruppe oder die Silangruppe. Bevorzugt weist der Monomertyp B eine Silangruppe als feuchtigkeitsreaktive Gruppe auf.

Vorteilhafterweise kann bei der Erfindung vorgesehen sein, dass der Monomertyp B ausgewählt ist aus der Gruppe bestehend aus Vinyltrichlorsilan, Methylvinyldichlorosilan, Vinyltriethoxysilan, Vinyltrimethoxysilan, Vinyltris(2-methoxyethoxy)silan, Vinyltriacetoxysilan, Vinylmethyldiethoxysilan, Vinyldimethylethoxysilan, Vinylmethyldimethoxysilan, Vinyldimethylmethoxysilan, Vinylmethyldiacetoxysilan, Vinyltriisopropoxysilan, Vinyltriisopropenoxysilan, Vinyltris(methylethylketoximino)silan, Divinyltetramethyldisiloxan, Tetravinyltetramethylcyclotetrasiloxane, 3-Acryloxypropyldimethylmethoxysilan, 3-Acryloxypropyldimethylethoxysilan, 3-Acryloxypropyltrimethoxysilan,3-Acryloxypropyltriethoxysilan, 3-Methacryloxypropyltrimethoxysilan, 3-Methacryloxypropyltriethoxysilan, 3-Methyacryloxy-propylmethyldiethoxysilan, 3 Methyacryloxypropylmethyldimethoxysilan, 3 Methacryloxy-propyl-tris(2 methoxyethoxy)silan, 4-(3 Trimethoxysilylpropyl)benzylstyrolsulfonat, Allyl-triethoxysilan, Allyltrimethoxysilan und Oligomeren dieser Silane.

Besonders geeignet als Monomertyp B ist das Methacryloxypropyltrimethoxysilan.

Erfindungsgemäß wird im Rahmen des Radikalpolymerisationsverfahrens ein Kettenübertragungsmittel eingesetzt, um den mittleren Polymerisationsgrad des fertigen Polymers zu verringern und ein niedrigmolekulares Polymer zu erhalten. Dem Fachmann sind Kettenübertragungsmittel für radikalische Polymerisationen bekannt.

Es kann von Vorteil sein, wenn im Rahmen der Erfindung das Kettenübertragungsmittel eine halogenorganische Verbindung, eine ungesättigte aromatische Verbindung oder ein Thiol ist, die bevorzugt ausgewählt ist aus der Gruppe bestehend aus Tetrachlormethan, 2,4-diphenyl-4-methyl-1-penten, Dodecylmercaptan, Thioglycolsäure, Octylthioglycolat und Thioglycerol.

Bevorzugt ist das Kettenübertragungsmittel Dodecylmercaptan.

Ferner ist es denkbar, dass bei dem Verfahren zur Herstellung der Polymerzusammensetzung das Polyol in einer Menge von 20 Gewichtsprozent bis 90 Gewichtsprozent, bevorzugt von 40 Gewichtsprozent bis 80 Gewichtsprozent und besonders bevorzugt von 50 Gewichtsprozent bis 60 Gewichtsprozent, bezogen auf das Gesamtgewicht der Komponenten Polyol, Monomertyp A und Monomertyp B, vorhanden ist.

Entsprechend ist es denkbar, dass bei dem Verfahren zur Herstellung der Polymerzusammensetzung das Prepolymer mit den endständigen NCO-Gruppen in einer Menge von 20 Gewichtsprozent bis 90 Gewichtsprozent, bevorzugt von 40 Gewichtsprozent bis 80 Gewichtsprozent und besonders bevorzugt von 50 Gewichtsprozent bis 60 Gewichtsprozent, bezogen auf das Gesamtgewicht der Komponenten Prepolymer, Monomertyp A und Monomertyp B, vorhanden ist.

In einer weiteren Möglichkeit kann vorgesehen sein, dass bei dem Verfahren zur Herstellung der Polymerzusammensetzung der Monomertyp A in einer Menge von 30 Gewichtsprozent bis 95 Gewichtsprozent, bevorzugt von 50 Gewichtsprozent bis 90 Gewichtsprozent und besonders bevorzugt von 70 Gewichtsprozent bis 85 Gewichtsprozent, bezogen auf das Gesamtgewicht von Monomertyp A und Monomertyp B, vorhanden ist.

Es kann weiter möglich sein, dass bei dem Verfahren zur Herstellung der Polymerzusammensetzung der Monomertyp B in einer Menge von 5 Gewichtsprozent bis 70 Gewichtsprozent, bevorzugt von 10 Gewichtsprozent bis 50 Gewichtsprozent und besonders bevorzugt von 15 Gewichtsprozent bis 30 Gewichtsprozent, bezogen auf das Gesamtgewicht von Monomertyp A und Monomertyp B, vorhanden ist.

Gemäß einem weiteren Vorteil kann vorgesehen sein, dass das niedermolekulare Polymer eine zahlenmittlere Molmasse von 3.000 bis 200.000 g/mol, bevorzugt von 5.000 bis 100.000 g/mol und besonders bevorzugt von 10.000 bis 60.000 g/mol aufweist.

In einem zweiten Aspekt betrifft die Erfindung eine Polymerzusammensetzung, die durch das erfindungsgemäße Verfahren herstellbar ist oder hergestellt wird.

Durch die erfindungsgemäße Synthese des Silan-modifizierten Ethylen-basierten Polymers in einem Polyol wird im Vergleich zu einem Silan-modifizierten Ethylen-basierten Polymer, das im PU-Prepolymer synthetisiert wird, eine Polymerzusammensetzung mit verbesserten Eigenschaften erhalten. Strukturell ist bei der erfindungsgemäßen Polymerzusammensetzung die Ausbildung eines interpenetrierenden Netzwerks vorteilhaft für die physiko-chemischen Eigenschaften. So weist sie eine erhöhte Temperaturbeständigkeit und auch eine verbesserte Barriere-Eigenschaft für Öl auf.

Wird bei dem erfindungsgemäßen Verfahren der optionale Schritt (c) durchgeführt, zeichnet sich diese Polymerzusammensetzung dadurch aus, dass das Polyol oder das Prepolymer teilweise mit dem niedrigmolekularen, durch Radikalpolymerisation entstandenen Polymer, vernetzt ist.

Vorzugsweise kann vorgesehen sein, dass die Polymerzusammensetzung eine Glasübergangstemperatur von zwischen -50 und 100 °C, bevorzugt von zwischen -30 und 70 °C und besonders bevorzugt von zwischen 0 und 60 °C aufweist.

Ein weiterer Vorteil kann im Rahmen der Erfindung erzielt werden, wenn sie eine Viskosität von 5.000 bis 25.000 mPa.s, und bevorzugt von 7.000 bis 21.000 mPa.s gemessen bei 90°C aufweist.

Es kann von Vorteil sein, wenn die Polymerzusammensetzung im Rahmen der Erfindung frei von Lösungsmitteln ist. Durch die weitere Umsetzung mit einem Polyisocyanat zu einem Polyurethan entsteht damit ein lösungsmittelfreies PU-Polymer.

Ebenfalls Gegenstand der Erfindung ist eine Verwendung der Polymerzusammensetzung nach mindestens einem der vorhergehenden Ansprüche als Klebstoff, Dichtstoff oder Beschichtungsmittel. Hierbei ist insbesondere vorgesehen, dass die Polymerzusammensetzung als einkomponentige Zusammensetzung mit Feuchtigkeit und durch Temperaturerhöhung auf mehr als 100°C aushärtet.

Ebenfalls Gegenstand der Erfindung ist ein Verfahren zur Herstellung einer feuchtigkeitshärtenden Polyurethan-Schmelzklebstoffzusammensetzung, wobei das Verfahren die folgenden Schritte umfasst:
a) Bereitstellen einer erfindungsgemäßen Polymerzusammensetzung;
b) Zugabe von ausreichend Polyisocyanat, um den gewünschten Isocyanatgehalt und Isocyanat-Index zu erzielen, und Polymerisieren unter Anwendung eines Additionspolymerisationsverfahrens;
c) Optionale Zugabe eines Aminosilans oder eines Mercaptosilans und Umsetzung zu einem silanterminierten Polyurethan.

Durch die erfindungsgemäße Synthese des Silan-modifizierten Ethylen-basierten Polymers in einem Polyol wird im Vergleich zu einem Silan-modifizierten Ethylen-basierten Polymer, das im PU-Prepolymer synthetisiert wird, über den Einsatz der erfindungsgemäßen Polymerzusammensetzung eine Polyurethan-Schmelzklebstoffzusammensetzung mit verbesserten Eigenschaften erhalten. So weist das erfindungsgemäße PU-Hotmelt ein höhere Temperaturbeständigkeit, eine erhöhte chemische Beständigkeit und eine verbesserte Adhäsion auf anorganischen Materialien auf. Zudem zeigte sich für die erhaltene Polymerzusammensetzung eine verbesserte Barriere-Eigenschaft für Öl.

Als Polyisocyanate für die Herstellung des Polyurethanpolymers können handelsübliche Polyisocyanate, insbesondere Diisocyanate, verwendet werden.

Es kann weiter möglich sein, dass das Polyisocyanat ausgewählt ist aus der Gruppe bestehend aus Ethylendiisocyanat, Ethylidendiisocyanat, Propylendiisocyanat, Butylendiisocyanat, Pentamethylendiisocyanat, Hexamethylendiisocyanat, Toluoldiisocyanat, Cyclopentylen-1,3-diisocyanat, Cyclohexylen-1,4-diisocyanat, Cyclohexylen-1,2-diisocyanat, 4,4'-Diphenylmethan-diisocyanat, 2,4'-Diphenylmethandiisocyanat, 2,2'-Diphenylmethan-diisocyanat,4,4'-Diisocyanatodicyclohexylmethan, 2,2-Diphenylpropan-4,4'-diisocyanat, p-Phenylen-diisocyanat, m-Phenylen-diisocyanat, Xylylen-diisocyanat, 1,4-Naphthylen-diisocyanat, 1,5-Naphthylen-diisocyanat, Diphenyl-4,4' -diisocyanat, Azobenzol-4,4'-diisocyanat, Diphenylsulfon-4,4'-diisocyanat, Dichlorhexamethylen-diisocyanat, Furfuryliden-diisocyanat, 1-Chlorbenzol-2,4-diisocyanat, 4,4',4"-Triisocyanato-triphenylmethan, 1,3,5-Triisocyanato-benzol, 2,4,6-Triisocyanato-toluol und 4,4'-Dimethyldiphenylmethan-2,2',5,5-tetraisocyanat, 3-Isocyanatmethyl-3,5,5-trimethylcyclohexylisocyanat, 1,3-bis(isocyanatomethyl)benzol, 1,3-bis(isocyanatomethyl)cyclohexan, Block-Diisocyanate und Carbodiimid-modifizierte Polyisocyanate, sowie beliebige Mischungen der vorgenannten Isocyanate.

Vorteilhafterweise kann im Rahmen der Erfindung vorgesehen sein, dass bei dem Verfahren zur Herstellung einer feuchtigkeitshärtenden Polyurethan-Schmelzklebstoffzusammensetzung der freie Isocyanatgehalt zwischen 0 und 20%, bevorzugt zwischen 0 und 15% und besonders bevorzugt zwischen 0 und 10% beträgt.

Nach einer weiteren Möglichkeit kann vorgesehen sein, dass bei diesem Verfahren der Isocyanat-Index zwischen 0,5 und 10, bevorzugt zwischen 1 und 3 und besonders bevorzugt zwischen 1,5 und 2,5 beträgt.

Gemäß dem optionalen Schritt c) kann die im Schritt b) erhaltene feuchtigkeitshärtenden Polyurethan-Schmelzklebstoffzusammensetzung durch Zugabe eines Aminosilans oder eines Mercaptosilans zu einem silanterminierten Polyurethan umgesetzt werden.

Erfindungsgemäß wird bei dem Schritt c) ein Aminosilan oder ein Mercaptosilan eingesetzt. Dies ist so zu verstehen, dass hier mindestens ein Aminosilan oder ein Mercaptosilan eingesetzt werden kann, also auch zwei, drei, vier oder noch mehr Aminosilane oder Mercaptosilane. Bevorzugterweise wird im Verfahren genau ein Aminosilan oder genau ein Mercaptosilan eingesetzt.

Bevorzugt ist das Aminosilan ein Aminosilan AS der Formel (I),

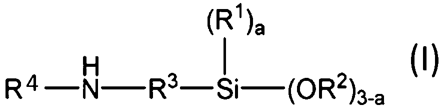

Der Rest R¹ steht für einen linearen oder verzweigten, einwertigen Kohlenwasserstoffrest mit 1 bis 12 C-Atomen, welcher gegebenenfalls eine oder mehrere C-C-Mehrfachbindungen und/oder gegebenenfalls cyclo-aliphatische und/oder aromatische Anteile aufweist. Insbesondere steht R¹ für eine Methyl-, Ethyl- oder Isopropylgruppe.

Der Rest R² steht für einen Acylrest oder für einen linearen oder verzweigten, einwertigen Kohlenwasserstoffrest mit 1 bis 12 C-Atomen, welcher gegebenenfalls eine oder mehrere C-C-Mehrfachbindungen und/oder gegebenenfalls cycloaliphatische und/oder aromatische Anteile aufweist. Vorzugsweise steht der Rest R² für eine Acyl- oder Alkylgruppe mit 1 bis 5 C-Atomen, insbesondere für eine Methyl- oder für eine Ethyl- oder für eine Isopropylgruppe.

Der Rest R³ steht für einen linearen oder verzweigten, zweiwertigen Kohlenwasserstoffrest mit 1 bis 12 C-Atomen, welcher gegebenenfalls cyclische und/oder aromatischen Anteile, und gegebenenfalls ein oder mehrere Heteroatome aufweist. Vorzugsweise steht der Rest R³ für einen Alkylenrest mit 1 bis 3 C-Atomen, insbesondere mit 3 C-Atomen.

Weiterhin steht der Index a für einen Wert von 0, 1 oder 2, insbesondere für 0 oder 1.

Der Rest R⁴ steht für ein Wasserstoffatom oder für einen linearen oder verzweigten Kohlenwasserstoffrest mit 1 bis 20 C-Atomen, welcher gegebenenfalls cyclische Anteile aufweist, oder für einen Rest der Formel (II) steht.

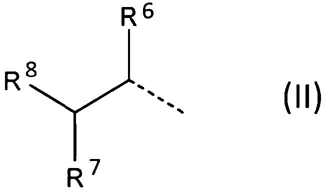

Dabei stehen die Reste R⁶ und R⁷ unabhängig voneinander für ein Wasserstoffatom oder für einen Rest aus der Gruppe umfassend -R⁹ , -CN und -COOR⁹ .

Der Rest R⁸ steht für ein Wasserstoffatom oder für einen Rest aus der Gruppe umfassend -CH₂-COOR⁹, -COOR⁹, -CONHR⁹, -CON(R⁹)₂, -CN, -NO₂, -PO(OR⁹)₂, -SO₂R⁹ und - SO₂OR⁹.

Der Rest R⁹ steht für einen, gegebenenfalls mindestens ein Heteroatom enthaltenden, Kohlenwasserstoffrest mit 1 bis 20 C-Atomen.

Beispiele für geeignete Aminosilane AS der Formel (I) sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, Acryl- und Methacrylsäureestern, Acryl- oder Methacrylsäureamiden, Maleinsäure- und Fumarsäurediestern, Citraconsäurediestern und Itaconsäurediestern, beispielsweise N-(3-Trimethoxysilyl-propyl)-amino-bernsteinsäuredimethylester und -diethylester; sowie Analoga der genannten Aminosilane mit Ethoxy- oder Isopropoxygruppen anstelle der Methoxygruppen am Silicium. Als Aminosilane AS besonders geeignet sind sekundäre Aminosilane, insbesondere Aminosilane AS, bei denen R4 in Formel (I) verschieden von H ist. Bevorzugt sind die Michael-artigen Addukte, insbesondere N-(3-Trimethoxysilyl-propyl)-amino-bernsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂ -Gruppen) in einer der Michael-Addition analogen Weise nucleophile Additionsreaktionen einzugehen (Hetero-Michael-Addition).

In einem weiteren Aspekt betrifft die Erfindung eine feuchtigkeitshärtende Polyurethan-Schmelzklebstoffzusammensetzung, die durch das vorab offenbarte Verfahren herstellbar ist oder hergestellt wird.

Ein weiterer Vorteil kann im Rahmen der Erfindung erzielt werden, wenn die Polyurethan-Schmelzklebstoffzusammensetzung eine Viskosität von 10 mPas bis 150.000 mPas bei 120°C aufweist. Die Viskosität beträgt hierbei bevorzugt zwischen 1.000 und 100.000 mPas, besonders bevorzugt zwischen 3.000 und 75.000 mPas und insbesondere zwischen 2.000 und 50.000 mPas.

Ebenfalls Gegenstand der Erfindung ist eine Verwendung der erfindungsgemäßen feuchtigkeitshärtenden Polyurethan-Schmelzklebstoffzusammensetzung als Klebstoff, Dichtstoff oder Beschichtungsmittel. Hierbei ist insbesondere vorgesehen, dass sie als Klebstoff eingesetzt wird.

Ebenfalls Gegenstand der Erfindung ist ein Verfahren zur Herstellung eines 1K-Polyurethanklebstoff umfassend die folgenden Schritte:
a) Bereitstellen der erfindungsgemäßen Polymerzusammensetzung wobei, bei dessen Herstellung anstelle der Temperaturerhöhung im optionalen Schritt c) das Polymerisat auf eine Temperatur von 80 bis 20°C abgekühlt wird;
b) Zugabe eines erfindungsgemäßen Polyisocyanats, um einen gewünschten freien Isocyanatgehalt und gewünschten Isocyanat-Index zu erzielen;
c) optionales Abkühlen auf eine Temperatur von 80 bis 20 °C für eine Zeitdauer von 0,5 bis 5 Stunden.

Als Polyisocyanate für die Herstellung des Polyurethanpolymers können handelsübliche Polyisocyanate, insbesondere Diisocyanate, verwendet werden.

Es kann weiter möglich sein, dass das Polyisocyanat ausgewählt ist aus der Gruppe bestehend aus Ethylendiisocyanat, Ethylidendiisocyanat, Propylendiisocyanat, Butylendiisocyanat, Pentamethylendiisocyanat, Hexamethylendiisocyanat, Toluoldiisocyanat, Cyclopentylen-1,3-diisocyanat, Cyclohexylen-1,4-diisocyanat, Cyclohexylen-1,2-diisocyanat, 4,4'-Diphenylmethan-diisocyanat, 2,4'-Diphenylmethandiisocyanat, 2,2'-Diphenylmethan-diisocyanat,4,4'-Diisocyanatodicyclohexylmethan, 2,2-Diphenylpropan-4,4'-diisocyanat, p-Phenylen-diisocyanat, m-Phenylen-diisocyanat, Xylylen-diisocyanat, 1,4-Naphthylen-diisocyanat, 1,5-Naphthylen-diisocyanat, Diphenyl-4,4' -diisocyanat, Azobenzol-4,4'-diisocyanat, Diphenylsulfon-4,4'-diisocyanat, Dichlorhexamethylen-diisocyanat, Furfuryliden-diisocyanat, 1-Chlorbenzol-2,4-diisocyanat, 4,4',4"-Triisocyanato-triphenylmethan, 1,3,5-Triisocyanato-benzol, 2,4,6-Triisocyanato-toluol und 4,4'-Dimethyldiphenylmethan-2,2',5,5-tetraisocyanat, 3-Isocyanatmethyl-3,5,5-trimethylcyclohexylisocyanat, 1,3-bis(isocyanatomethyl)benzol, 1,3-bis(isocyanatomethyl)cyclohexan, Block-Diisocyanate und Carbodiimid-modifizierte Polyisocyanate, polymeres Diphenylmethandiisocyanat (PMDI), sowie beliebige Mischungen der vorgenannten Isocyanate.

In einer bevorzugten Ausführungsform werden als Polyisocyanat ein Diphenylmethanisocyanat (MDI) oder polymeres Diphenylmethandiisocyanat (PMDI) eingesetzt.

Bei dem MDI kann sich um ein Gemisch von zwei oder drei seiner Isomere handeln, nämlich 2,2'-Diphenylmethan-diisocyanat, 2,4'-Diphenylmethan-diisocyanat, oder 4,4'-Diphenylmethan-diisocyanat. Es kann aber auch nur ein Isomer eingesetzt werden, welches dann bevorzugt das 4,4'-Diphenylmethan-diisocyanat ist.

Polymeres Diphenylmethandiisocyanat (PMDI) auch Technisches MDI genannt, ist Stoffgemisch aus Methylendiphenylisocyanaten und homologen aromatischen Polyisocyanaten. Die Bezeichnung "Polymeres Diphenylmethandiisocyanat" ist jedoch tatsächlich fachlich falsch, da es sich nicht um ein Polymer, sondern um ein Stoffgemisch aus Verbindungen mit mehreren (typischerweise bis 6) Phenylengruppen handelt, die je eine Isocyanat-Gruppe tragen. Häufige Handelsbezeichnung ist auch Polymethylenpolyphenylisocyanat.

Gemäß einer vorteilhaften Weiterbildung der Erfindung kann vorgesehen sein, dass der im Schritt b) des Verfahrens eingestellte freie Isocyanatgehalt zwischen 2 und 40%, bevorzugt zwischen 5 und 30% und besonders bevorzugt zwischen 10 und 20% beträgt.

Weiter ist im Rahmen der Erfindung denkbar, dass der im Schritt b) des Verfahrens eingestellte Isocyanat-Index zwischen 1,5 und 20, bevorzugt zwischen 2 und 15 und besonders bevorzugt zwischen 4 und 10 beträgt.

In einem weiteren Aspekt betrifft die Erfindung einen 1K-Polyurethanklebstoff, die durch das vorab offenbarte Verfahren herstellbar ist oder hergestellt wird.

Nach einer weiteren Möglichkeit kann vorgesehen sein, dass der 1K-Polyurethanklebstoff eine Viskosität von 5.000 bis 25.000 mPa.s, und bevorzugt von 6.000 bis 21.000 mPa.s aufweist, gemessen bei 20 °C.

Ebenfalls Gegenstand der Erfindung ist eine Verwendung des erfindungsgemäßen 1K-Polyurethanklebstoffs als Klebstoff, Beschichtungsmasse oder Dichtstoff, insbesondere als Vielzweck-Klebstoff, Montage-Klebstoff, Konstruktions-Klebstoff, Papier- und Verpackungs-Klebstoff, Folienkaschierklebstoff, Klebstoff für keramische und metallische Werkstoffe, Holz, Glas, Sandwich-Systeme, Textilien, Armierungsgewebe, Materialien im Bereich Flugzeuge, Militär, oder Schiffsbau.

Die Erfindung betrifft in einem weiteren Aspekt eine Polyurethan-Zusammensetzung umfassend
a) 5 bis 90 Gew.-% eines Urethanpolymers oder Urethanvorpolymers, hergestellt durch Additionspolymerisation eines Polyisocyanats und eines Polyols;
b) 10 bis 95 Gew.-% eines niedrigmolekularen Polymers von ethylenisch ungesättigten Monomeren, die keinen aktiven Wasserstoff enthalten, wobei mindestens eines der Monomere ein ethylenisch ungesättigtes Monomer mit einer Siloxangruppe ist.

In einer Ausführungsform der Erfindung ist die Polyurethan-Zusammensetzung, dadurch gekennzeichnet, dass das niedrigmolekulare Polymer zu mehr als 50%, bevorzugt zu mehr als 75% und weiterhin bevorzugt zu 100% aus einem ethylenisch ungesättigten Monomer mit einer Siloxangruppe besteht.

In einer bevorzugten Ausführungsform der Erfindung ist die Polyurethan-Zusammensetzung, dadurch gekennzeichnet, dass das ethylenisch ungesättigte Monomer mit einer Siloxangruppe ein Silan-modifiziertes Acrylat ist.

Die Erfindung betrifft in einem zweiten Aspekt die Verwendung eines ethylenisch ungesättigtes Monomer mit einer Siloxangruppe zur Copolymerisation mit ethylenisch ungesättigten Monomeren, die keinen aktiven Wasserstoff enthalten in einem Polyol oder in einem Prepolymer mit den endständigen NCO-Gruppen als Lösungsmittel.

In einer Ausführungsform der Erfindung ist die Verwendung dadurch gekennzeichnet, dass das ethylenisch ungesättigtes Monomer mit einer Siloxangruppe ein Silan-modifiziertes Acrylat ist.

In einem zusätzlichen Aspekt betrifft die Erfindung ein Acrylat-Copolymer umfassend:
a) 5 bis 95 Gew.-% eines oder mehrerer Acrylate-Monomere, die keinen aktiven Wasserstoff enthalten, bevorzugt ausgewählt aus der Gruppe bestehend aus Butylmethacrylat und Methylmethacrylat;
b) 5 bis 95 Gew.-% eines oder mehrerer Acrylatmonomere mit einer Siloxan-Seitengruppe, bevorzugt ein 3-Methacryloxypropyltrimethoxysilan.

### Definitionen

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin Copolymere und so genannte Prepolymere, das heißt reaktive oligomere Voraddukte, deren funktionelle Gruppen am Aufbau von Makromolekülen beteiligt sind.

Der Begriff "Copolymer" bezeichnet im vorliegenden Dokument ein Polymer, das aus zwei oder mehr verschiedenartigen Monomereinheiten zusammengesetzt ist. Damit unterscheidet sich das Copolymer von einem Homopolymer, das aus nur einer (realen oder gedachten) Monomerart aufgebaut ist und entsprechend nur eine Wiederholeinheit besitzt. Copolymere können in fünf Klassen unterteilt werden, nämlich
1.) statistische Copolymere, in denen die Verteilung der beiden Monomeren in der Kette einer statistischen Verteilung folgt,
2.) Gradientcopolymere, die prinzipiell den statistischen Copolymeren ähnlich sind, in denen jedoch der Anteil des einen Monomers im Verlauf der Kette zu- und des anderen abnimmt,
3.) Alternierende Copolymere, in denen sich die beiden Monomere abwechseln,
4.) Blockcopolymere und Segmentcopolymere, die aus längeren Sequenzen oder Blöcken jedes Monomers besteht, und
5.) Pfropfcopolymere (engl.: graft copolymers), bei denen Blöcke eines Monomers auf das Gerüst (Rückgrat) eines anderen Monomers aufgepfropft sind.

Der Begriff "niedrigmolekulares Polymer" bezeichnet im vorliegenden Dokument ein Polymer mit einer zahlenmittleren Molmasse von 200.000 g/mol oder weniger.

Der Begriff "Polyurethanpolymer" umfasst sämtliche Polymere, welche nach dem so genannten Diisocyanat-Polyadditions-Verfahren hergestellt werden. Dies schließt auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter einem "aktiven Wasserstoff" versteht man im vorliegenden Dokument einen an N, O oder S gebundenen Wasserstoff (synonym auch als "Zerewitinoff-aktiver Wasserstoff" bezeichnet), wenn er nach einem von Zerewitinoff aufgefundenen Verfahren durch Umsetzung mit Methylmagnesiumjodid Methan liefert. Typische Beispiele für Verbindungen mit aktivem Wasserstoff sind Verbindungen, die Carboxyl-, Hydroxyl-, Amino-, Imino- oder Thiol-Gruppen als funktionelle Gruppen enthalten.

Entsprechend handelt es sich bei dem Monomer, das keinen aktiven Wasserstoff enthält (Monomertyp B) um ein Monomer, das keine Carboxyl-, Hydroxyl-, Amino-, Imino- oder Thiol-Gruppen aufweist.

Gemäß der vorliegenden Anmeldung ist eine "funktionelle Gruppe" als Atomgruppe in einer organischen Verbindung, die die Stoffeigenschaften und das Reaktionsverhalten der sie tragenden Verbindung maßgeblich bestimmt. Chemische Verbindungen, die die gleichen funktionellen Gruppen tragen, werden auf Grund ihrer oft ähnlichen Eigenschaften zu Stoffklassen zusammengefasst.

Unter einer "feuchtigkeitsreaktiven funktionellen Gruppe" versteht man im vorliegenden Dokument eine funktionelle Gruppe, die mit Wasser reagiert. Diese Reaktion kann damit zur Vernetzung von zwei oder mehreren derartiger Gruppen führen und damit zum Aushärten des entsprechenden Polymers führen. Dem Fachmann sind im Bereich der Polymere feuchtigkeitsreaktive (aushärtbare) Gruppen bekannt. Als Beispiele seien hier die Silangruppe und die Isocyanat-Gruppe genannt.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.

Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren und zählen damit zu den feuchtigkeitsreaktiven Gruppen.

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH2 -Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Unter "Molekulargewicht" versteht man im vorliegenden Dokument die molare Masse (in Gramm pro Mol oder in Dalton) eines Moleküls. Als "mittleres Molekulargewicht" versteht man im vorliegenden Dokument stets das Zahlenmittlere der Molekulargewichtsverteilung Mₙ (Zahlenmittel). Als Synonym für "mittleres Molekulargewicht" wird hierbei auch der Begriff "zahlenmittlere Molmasse" verwendet.

Der Begriff "polymeres Diphenylmethandiisocyanat" (PMDI) ist Stoffgemisch aus Methylendiphenylisocyanaten und homologen aromatischen Polyisocyanaten. Die Bezeichnung "Polymeres Diphenylmethandiisocyanat" stellt aus chemischer Sicht eine Fehlbezeichnung dar, da es sich nicht um ein Polymer, sondern um ein Stoffgemisch aus Verbindungen mit mehreren (typischerweise bis 6) Phenylengruppen handelt, die je eine Isocyanat-Gruppe tragen. Häufige Handelsbezeichnung ist auch Polymethylenpolyphenylisocyanat.

Im Rahmen der vorliegenden Anmeldung ist ein "Kettenübertragungsmittel" definiert als ein organisches Molekül, das eine Kettenübertragung durchführen kann. Eine Ketteübertragungsreaktion ist eine Reaktion im Verlauf einer Kettenpolymerisation, bei der die Aktivität einer wachsenden Polymerkette auf ein anderes Molekül übertragen wird. Kettenübertragungsreaktionen verringern den mittleren Polymerisationsgrad des fertigen Polymers. Dem Fachmann sind Kettenübertragungsmittel für radikalische Polymerisationen bekannt.

Unter dem Begriff "Lösungsmittel" werden im vorliegenden Dokument Verbindungen verstanden, wie sie aufgeführt sind als organische Lösungsmittel in CD Römpp Chemie Lexikon, 9. Auflage, Version 1.0, Georg Thieme Verlag, Stuttgart 1995. Die erfindungsgemäß verwendeten Polyole oder Prepolymere mit endständigen NCO-Gruppen werden von dieser Definition nicht erfasst, obwohl sie als Lösungsmittel für die Monomere und auch das durch Radikalpolymerisation entstandene niedrigmolekulare Polymer fungieren.

Als "fest" werden im vorliegenden Dokument Substanzen verstanden, welche ohne äußere Einwirkung ihre Form nicht verändern oder sich nur schwer verformen lassen, insbesondere sind sie jedoch nicht fließfähig. Als "flüssig" werden entsprechend Substanzen verstanden, welche sich verformen lassen und fließfähig sind, was auch hochviskose und pastöse Substanzen einschließt.

Als "einkomponentig" (abgekürzt als "1K") wird im vorliegenden Dokument eine Zusammensetzung bezeichnet, bei welcher alle Bestandteile der Zusammensetzung vermischt im gleichen Gebinde gelagert werden und welche mit Feuchtigkeit härtbar ist. Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet, wobei die Aushärtung erst durch die Einwirkung von Feuchtigkeit abläuft oder vervollständigt wird.

Es sei ausdrücklich darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll. Weiterhin sind alle Zahlenangaben sowie Angaben zu Verfahrensparametern und/oder Vorrichtungsparametern im technischen Sinne zu verstehen, d.h. als mit den üblichen Toleranzen versehen zu verstehen. Auch aus der expliziten Angabe der Einschränkung "wenigstens" oder "mindestens" o.ä. darf nicht geschlossen werden, dass bei der einfachen Verwendung von "ein", also ohne die Angabe von "wenigstens" o.ä., ein "genau ein" gemeint ist.

Sofern nicht anders angegeben, handelt es sich im vorliegenden Dokument bei den %-Angaben um Gewichtsprozent-Angaben.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Ausführungsbeispiele

### 1. Herstellung einer erfindungsgemäßen Polymerzusammensetzung

Basierend auf der Polymerisation von Acrylatpolymeren in Polyolen wurde eine Basisformulierung gemäß Tabelle 1 durch die Verwendung von Acrylatsilanen modifiziert. Dabei wurde ein organofunktionelles 3-Methacryloxypropyltrimethoxysilan zu je 5, 10 und 12,5% eingesetzt.

Um ein silanmodifiziertes Acrylatpolymer herstellen zu können, wird die Vorlage in einem Glasreaktor unter Stickstoffatmosphäre auf 90 °C erhitzt. Nach 30 Minuten werden die Monomere innerhalb von 2 Stunden bei 90 °C dosiert und der Initiator zugegeben. Anschließend erfolgt die Nachreaktion innerhalb von 2 Stunden unter zusätzlicher Zugabe vom Initiator.

**Tabelle 1: Basisformulierung & Modifikationen vom IC406-23**

| Rohstoffe | Anteil [%] | | | |
|---|---|---|---|---|
| | Referenz (ohne Silan) | 1: Referenz mit 5% Silan | 2: Referenz mit 10% Silan | 3: Referenz mit 12,5% Silan |
| **Vorlage** | | | | |
| PPG 2000 | 57,7 | 57,7 | 57,7 | 57,7 |
| N-BMA | 8,6 | 7,6 | 6,6 | 6 |
| MMA | 3,2 | 2,8 | 2,4 | 2,2 |
| Silan | 0 | 1,4 | 2,8 | 3,6 |
| Dodecylmercaptan | 0,2 | 0,2 | 0,2 | 0,2 |
| Dilauroylperoxid | 0,2 | 0,2 | 0,2 | 0,2 |

| **Dosierung** | | | | |
|---|---|---|---|---|
| Dilauroylperoxid | 0,1 | 0,1 | 0,1 | 0,1 |
| N-BMA | 21,8 | 19,3 | 16,7 | 15,2 |
| MMA | 8,1 | 7,1 | 6,1 | 5,6 |
| Silan | 0 | 3,5 | 7,1 | 9,1 |
| Dilauroylperoxid | 0,1 | 0,1 | 0,1 | 0,1 |

| | | | | |
|---|---|---|---|---|
| (PPG-2000 =Polypropylenglycol MW = 2000; N-BMA = Butylmethacrylat; MMA= Methylmethacrylat; Silan = 3-Methacryloxypropyltrimethoxysilan) | | | | |

Die rheologischen Analysen haben ergeben, dass der 5%-ige Einsatz des Silans die Grundeigenschaften des Acrylats kaum verändert haben (vgl. Tabelle 2). Erhöht man den Anteil des Silans bis zu 12,5%, wird das System deutlich niedrigviskoser und sogar bei Raumtemperatur fließfähig.

**Tabelle 2: Rheologische Kennwerte von silanmodifizierten Acrylatpolymeren in Polyol**

| Versuche | Viskosität | | Internal Cohesion G' 20°C | tan Delta =1 |
|---|---|---|---|---|
| | @ 120 °C (mPas) | @ 140 °C (mPas) | | |
| Referenz: Acrylat* ohne Silan | 5.359 | 3.265 | 0,01 | 34 °C |
| 1: Acrylat* mit 5 % Silan | 5.332 | 3.265 | 0,01 | 27 °C |
| 2: Acrylat* mit 10 % Silan | 3.626 | 2.487 | 0,01 | 21 °C |
| 3: Acrylat* mit 12,5 % Silan | 1.749 | 1.100 | 0,00 | 11 °C |

| | | | | |
|---|---|---|---|---|
| * Acrylat= IC406-23 | | | | |

IC406-23 wurde mit unterschiedlichen Konzentrationen von 3-Methacryloxypropyltrimethoxysilan modifiziert, um daraus im Anschluss feuchtigkeitshärtende PU-Klebstoffe herzustellen. Überraschenderweise wurde gefunden, dass bei erhöhtem Silananteil im Acrylatanteil auch bei der Verwendung zur Herstellung von Polyurethanhotmelts sich eine viskositätserniedrigende Wirkung eingestellt hat und auf die Zugabe von Weichmachern vermieden werden kann.

### Beispiel 1 flüssiger PUR Klebstoff:

IC406-23 wurde auf eine Glasübergangstemperatur von 40°C kalkuliert, mit 12.5 % 3-Methacryloxypropyltrimethoxysilan modifiziert und in PPG 4000 (PCC Rokita Rokopol DE4020) polymerisiert (IC1760-5 mit PPG 4000). Dieses wurde anschließend zum Polyurethanklebstoff IC1701-45 umgesetzt (Tabelle 2).

**Tabelle 2: Formulierung von IC1701-45**

| Rohstoffe | Anteil [%] |
|---|---|
| IC1760-5 | 47,6 |
| PPG 4000 | 7 |
| DMDEE | 0,4 |
| pMDI | 45 |

In der nachfolgenden Tabelle 3 werden die Eigenschaften von IC1701-45 mit einem handelsüblichen 1-K PUR Klebstoff IC1701-22 verglichen. Hierbei zeigt sich die deutlich gesteigerte Perfomance des silanacrylat-modifizierten System bei der Verklebung von Holz.

**Tabelle 3: Eigenschaften von IC1701-22 & IC1701-45**

| Bezeichnung | Viskosität @ 20 °C * [mPas] | NCO-Gehalt [%] | D1** [N/mm²] | D4** [N/mm²] | WATT91*** [N/mm²] | open time**** [min] |
|---|---|---|---|---|---|---|
| IC 1701-22 | 6000 | 11 | 11,1 | 4,52 | 5,8 | 25-30 |
| IC 1701-45 | 7600 | 13,3 | 17 | 7,11 | 8,21 | 10 |

| | | | | | | |
|---|---|---|---|---|---|---|
| * Brookfield DVII, Sp. 6, 20 rpm; ** DIN EN 204; *** DIN EN 14257 **** interne Methode: Auf einem Natronkraftpapierstreifen (60 x 8 cm) wird ein 300 µm-Polymerfilm aufgetragen und in definierten Zeitintervallen (z.B. 1, 2 etc. Minuten) Papierstreifen ( 9 x 2 cm ) mit dem Fingerdruck angedrückt. Nach der Vernetzung werden die Papierstreifen abgezogen und bewertet. Es wird die Zeit notiert, in der mindestens 70% vom Papier auf dem Klebstofffilm haften bleiben. | | | | | | |

### Beispiel 2 PUR Schmelzklebstoff (Textil):

IC406-23 wurde auf eine Glasübergangstemperatur von -6 °C kalkuliert, mit 12.5 % 3-Methacryloxypropyltrimethoxysilan modifiziert und in PPG 1000 (PCC Rokita Rokopol D1002) polymerisiert (IC1760-6). Dieses wurde anschließend zum Polyurethanklebstoff IC768-3 umgesetzt (Tabelle 4).

Um ein Polyurethanklebstoff herstellen zu können, werden zum silanmodifizierten Acrylat IC1760-6 weitere Polyole und Additive bei 90 °C zugegeben und 45 Minuten bei ca. 10 mbar homogenisiert. Anschließend wird das 4,4'-MDI zugegeben und 60 Minuten gerührt. Vor dem Abfüllen des Polyurethanklebstoff wird dieser nochmals bei ca. 10 mbar entgast.

**Tabelle 4: Formulierung von IC768-3**

| Rohstoffe | Anteil [%] |
|---|---|
| IC1760-6 | 51,73 |
| PPG Triol | 11,75 |
| PPG 400 | 13,98 |
| Additive | 0,51 |
| 4,4'-MDI | 22,04 |

In der nachfolgenden Tabelle werden die Eigenschaften von IC768-3 mit einem PUR Schmelzklebstoff (Textil) verglichen. Hierbei zeigt sich ein deutlicher Anstieg der inneren Festigkeit (Kohäsion) der silanacrylat-modifizierten Variante.

**Tabelle 5: Eigenschaften von IC764-42 & IC768-3**

| Versuche | w(NCO) [%] | Viskosität | | | Internal Cohesion G' 20°C | tan Delta =1 |
|---|---|---|---|---|---|---|
| | | @ 90°C [mPas] | @ 120°C [mPas] | @ 140°C [mPas] | | |
| IC764-42 | 2,3 | 21.200 | 5.912 | 3.300 | 0,02 | 2°C |
| IC768-3 | 1,6 | 53.000 | 15.000 | 7.600 | 0,06 | 9°C |

### Messverfahren zur Bestimmung von Internal cohesion G' und tan Delta:

Mit Hilfe des Modular Compact Rheometer 301 (Fa. Anton Paar) wurde eine Oszillationsmessung in Abhängigkeit der Temperatur (160 bis -20 °C) durchgeführt. Dabei wird G' & G" und das Verhältnis (tan Delta) zueinander bei jeder Temperatur aufgezeichnet. G' beschreibt den festen Anteil und G" den flüssigen Anteil eines Materials. Die "Internal Cohesion G' " bei 20 °C beschreibt somit den festen Anteil des Materials bzw. wie hoch die Kohäsion ist. Wenn G' und G" gleich sind, dann ist tan Delta=1. Dies erfolgt bei einer bestimmten Temperatur, die dann abgelesen wird. Bei dieser Temperatur wird ein Zustand beschrieben, bei dem das Material weder eine Flüssigkeit noch ein Festkörper ist. Wird die Temperatur weiter herabgesetzt, liegt idealerweise ein "Festkörper" vor.

### Beispiel 3: Herstellung eines PUR Schmelzklebstoffs (Textil):

Um ein Prepolymer mit endständigen Isocyanat (NCO)-Gruppen IC768-15 (siehe Tabelle 6) herstellen zu können, wird eine Polyolmischung auf 120 °C erhitzt und 45 Minuten bei ca. 10 mbar homogenisiert. Anschließend wird das 4,4'-MDI zugegeben und 60 Minuten unter Stickstoffatmosphäre gerührt.

**Tabelle 6: Formulierung des Prepolymers IC768-15**

| Rohstoffe | Anteil [%] |
|---|---|
| PPG 1000 | 59,0 |
| PPG 400 | 7,9 |
| 4,4'-MDI | 33,1 |
| [NCO]/[OH] | 1,7:1 |

| | |
|---|---|
| (PPG 1000 =Polypropylenglycol Mn = 1000; PPG 400 =Polypropylenglycol Mn = 400; 4,4'-MDI = 4,4'-Diphenylmethan-diisocyanat; [NCO]/[OH] = Molares Verhältnis von NCO- zu OH-Gruppen in dem erhaltenen Prepolymer). | |

Um im Anschluss ein silanmodifiziertes Acrylatpolymer IC768-17 (siehe Tabelle 7) im Prepolymer IC768-15 herstellen zu können, wird das IC768-15 auf 70 °C abgekühlt. Nach der Zugabe einer Teilmenge der Monomeren, des Initiators und des Kettenübertragungsmittels wird die Mischung auf 90 °C erhitzt. Nach 30 Minuten werden die Monomere innerhalb von 2 Stunden bei 90 °C dosiert und erneut Initiator zugegeben. Anschließend erfolgt die Nachreaktion innerhalb von 2 Stunden unter zusätzlicher Zugabe vom Initiator. Anschließend kann der PUR-Schmelzklebstoff bei 90 °C abgefüllt werden.

Um mögliche unerwünschte Nebenreaktionen während der Polymerisation mit dem Prepolymer IC768-15 (vgl. Tabelle 7) näher untersuchen zu können, ist eine Referenzsynthese notwendig. Hierbei wurde als Vorlage statt dem Prepolymer IC768-15 das PPG 1000 (vgl. Tabelle 6) gewählt und stellt somit IC1760-9 dar (siehe Tabelle 7). Nach der Polymerisation wird es mit Zugabe von PPG 400 und 4,4'-MDI zu einem Polyurethanklebstoff IC768-7 (siehe Tabelle 8) umgesetzt, wie bereits in Beispiel 2 beschrieben.

**Tabelle 7: Formulierung von IC768-17 & IC1760-9**

| Versuchsnummer | IC768-17 | IC1760-9 |
|---|---|---|
| Rohstoffe | Anteil [%] | |
| Vorlage: | | |
| PPG 1000 | - | 57,7 |
| IC768-15 | 69,9 | - |
| BA | 3,1 | 4,4 |
| MMA | 2,8 | 3,9 |
| Silan | 2,5 | 3,5 |
| Dodecylmercaptan | 0,13 | 0,2 |
| Dilauroylperoxid | 0,13 | 0,2 |

| Dosierung | | |
|---|---|---|
| Dilauroylperoxid | 0,07 | 0,1 |
| BA | 7,9 | 11,1 |
| MMA | 7,0 | 9,8 |
| Silan | 6,4 | 9,0 |
| Dilauroylperoxid | 0,07 | 0,1 |

| | | |
|---|---|---|
| (BA=Butylacrylat; MMA= Methylmethacrylat; Silan = 3-Methacryloxypropyltrimethoxysilan) | | |

**Tabelle 8: Formulierung von IC768-7**

| Rohstoffe | Anteil [%] |
|---|---|
| IC1760-9 | 71,3 |
| PPG 400 | 5,5 |
| 4,4'-MDI | 23,2 |
| [NCO]/[OH] | 1,7 |

Die Produktanalyse (siehe Tabelle 9) weist darauf hin, dass die Polymerisation von silanmodifiziertes Acrylatpolymer in Anwesenheit von reaktiven Isocyanat-Gruppen unabhängig verläuft: Die Messergebnisse liegen innerhalb der Toleranzgrenzen der Produktspezifikation.

**Tabelle 9: Eigenschaften von IC768-17 vs. IC768-7**

| **Versuche** | **w(NCO) [%]** | **Viskosität** | | **Internal Cohesion G' 20°C** | **tan Delta =1** |
|---|---|---|---|---|---|
| | | **@ 120°C [mPas]** | **@ 140°C [mPas]** | | |
| IC768-7 | 3,4 | 4.100 | 2.900 | 0,01 | - |
| IC768-17 | 3,2 | 5.900 | 4.700 | 0,01 | - |

### Aspekte der Offenbarung

1. Verfahren zur Herstellung einer Polymer-Zusammensetzung umfassend die folgenden Schritte:
   a) Kombinieren von:
      (i) einem Polyol oder einem Prepolymer mit endständigen Isocyanat (NCO)-Gruppen mit
      (ii) einem ethylenisch ungesättigten, keinen aktiven Wasserstoff enthaltenden Monomer, das keine feuchtigkeitsreaktiven funktionellen Gruppen aufweist (Monomertyp A), und
      (iii) einem ethylenisch ungesättigten, keinen aktiven Wasserstoff enthaltenden Monomer, das eine feuchtigkeitsreaktive funktionelle Gruppe aufweist (Monomertyp B);
   b) Polymerisieren der Mischung aus Schritt a. unter Anwendung eines Radikalpolymerisationsverfahren mit einem Kettenübertragungsmittel zur Erzielung eines niedrigmolekularen Polymers;
   c) optionale Erwärmung der Mischung aus Schritt b) auf eine Temperatur von 100°C bis 160°C für 10 bis 60 Minuten zur teilweisen Vernetzung des Polyols oder des Prepolymers mit dem endständigen NCO-Gruppen mit dem niedrigmolekularen Polymer.
2. Verfahren nach Aspekt 1, **dadurch gekennzeichnet, dass** das Polyol ausgewählt ist aus der Gruppe bestehend aus Polyester, Hydroxylgruppen-haltiges Polycaprolacton, Polyoxyalkenpolyol, monosubstituierter Glykolester, Polythioether, Polyamid, Polyesteramid, Polycarbonat, Polyacetal, Polykohlenwasserstoffpolyol, Polyacrylatpolyol, Polymethacrylatpolyol, Polyalkohol, Bisphenol, Polycarbonatpolyol, polyhydroxyfunktionelle Fette und Öle und Mischungen hiervon, wobei das Polyol bevorzugterweise ein Diol, ein Polyethylenoxid oder ein Polypropylenoxid ist.
3. Verfahren nach mindestens einem der Aspekte 1 und 2, **dadurch gekennzeichnet, dass** der Monomertyp A ausgewählt ist aus der Gruppe bestehend aus C1 bis C12 Ester der Acrylsäure oder Methacrylsäure wie Methylacrylat, Ethylacrylat, n-Butylacrylat, Methylmethacrylat, Ethylmethacrylat oder n-Butylmethacrylat, Vinylester wie Vinylacetat oder Vinylproprionat, Vinylether, Fumarate, Maleate, Styrole, Acrylnitrile, Ethylene, oder Mischungen hiervon, wobei der Monomertyp A bevorzugterweise n-Butylmethacrylat (n-BMA) oder Methylmethacrylat (MMA) oder ein Gemisch hiervon ist.
4. Verfahren nach mindestens einem der vorhergehenden Aspekte, **dadurch gekennzeichnet, dass** der Monomertyp B ausgewählt ist aus der Gruppe bestehend aus Vinylverbindungen, Acrylaten, Methacrylaten, Fumarate, Maleate, Styrole, Acrylnitrile, Ethylene, oder Mischungen hiervon, wobei diese eine feuchtigkeitsreaktive funktionelle Gruppe aufweisen, die bevorzugt eine Silangruppe ist.
5. Verfahren nach Aspekt 4, **dadurch gekennzeichnet, dass** der Monomertyp B ausgewählt ist aus der Gruppe bestehend aus Vinyltrichlorsilan, Methylvinyldichlorosilan, Vinyltriethoxysilan, Vinyltrimethoxysilan, Vinyltris(2-methoxyethoxy)silan, Vinyltriacetoxysilan, Vinylmethyldiethoxysilan, Vinyldimethylethoxysilan, Vinylmethyldimethoxysilan, Vinyldimethylmethoxysilan, Vinylmethyldiacetoxysilan, Vinyltriisopropoxysilan, Vinyltriisopropenoxysilan, Vinyltris(methylethylketoximino)silan, Divinyltetramethyldisiloxan, Tetravinyltetramethylcyclotetrasiloxane, 3-Acryloxypropyldimethylmethoxysilan, 3-Acryloxypropyldimethylethoxysilan, 3-Acryloxypropyltrimethoxysilan, 3-Acryloxypropyltriethoxysilan, 3-Methacryloxypropyltrimethoxysilan, 3-Methacryloxypropyltriethoxysilan, 3-Methyacryloxypropylmethyldiethoxysilan, 3-Methyacryloxypropylmethyldimethoxysilan, 3-Methacryloxypropyltris(2-methoxyethoxy)silan, 4-(3-Trimethoxysilylpropyl)benzylstyrolsulfonat, Allyltriethoxysilan, Allyltrimethoxysilan und Oligomeren dieser Silane, wobei der Monomertyp A bevorzugterweise Methacryloxypropyltrimethoxysilan ist.
6. Verfahren nach mindestens einem der vorhergehenden Aspekte, **dadurch gekennzeichnet, dass** bei dem Radikalpolymerisationsverfahren als Initiator ein Peroxidinitiator oder ein Azoinitiator verwendet wird, der bevorzugt ausgewählt ist aus der Gruppe bestehend aus Dilauroylperoxid, Dibenzoylperoxid und Azobis(isobutyronitril).
7. Verfahren nach mindestens einem der vorhergehenden Aspekte, **dadurch gekennzeichnet, dass** das Kettenübertragungsmittel eine halogenorganische Verbindung, eine ungesättigte aromatische Verbindung oder ein Thiol, ist, die bevorzugt ausgewählt aus der Gruppe bestehend aus Tetrachlormethan, 2,4-diphenyl-4-methyl-1-penten, Dodecylmercaptan (DDM), Thioglycolsäure, Octylthioglycolat, und Thioglycerol, und besonders bevorzugt Dodecylmercaptan ist.
8. Verfahren nach mindestens einem der vorhergehenden Aspekte, **dadurch gekennzeichnet, dass** das Polyol oder das Prepolymer mit endständigen NCO-Gruppen in einer Menge von 20 Gewichtsprozent bis 90 Gewichtsprozent, bevorzugt von 40 Gewichtsprozent bis 80 Gewichtsprozent und besonders bevorzugt von 50 Gewichtsprozent bis 60 Gewichtsprozent, bezogen auf das Gesamtgewicht der Komponenten Polyol bzw. Prepolymer, Monomertyp A und Monomertyp B, vorhanden ist.
9. Verfahren nach mindestens einem der vorhergehenden Aspekte, **dadurch gekennzeichnet, dass** der Monomertyp A in einer Menge von 30 Gewichtsprozent bis 95 Gewichtsprozent, bevorzugt von 50 Gewichtsprozent bis 90 Gewichtsprozent und besonders bevorzugt von 70 Gewichtsprozent bis 85 Gewichtsprozent, bezogen auf das Gesamtgewicht von Monomertyp A und Monomertyp B, vorhanden ist.
10. Verfahren nach mindestens einem der vorhergehenden Aspekte, **dadurch gekennzeichnet, dass** der Monomertyp B in einer Menge von 5 Gewichtsprozent bis 70 Gewichtsprozent, bevorzugt von 10 Gewichtsprozent bis 50 Gewichtsprozent und besonders bevorzugt von 15 Gewichtsprozent bis 30 Gewichtsprozent, bezogen auf das Gesamtgewicht von Monomertyp A und Monomertyp B, vorhanden ist.
11. Verfahren nach mindestens einem der vorhergehenden Aspekte, **dadurch gekennzeichnet, dass** das niedermolekulare Polymer eine zahlenmittlere Molmasse von 3.000 bis 200.000 g/mol, bevorzugt von 5.000 bis 100.000 g/mol und besonders bevorzugt von 10.000 bis 60.000 g/mol aufweist.
12. Polymerzusammensetzung hergestellt durch ein Verfahren nach mindestens einem der vorhergehenden Aspekte.
13. Polymerzusammensetzung nach Aspekt 12, **dadurch gekennzeichnet, dass** die Polymerzusammensetzung eine Glasübergangstemperatur von zwischen -50 und 100 °C, bevorzugt von zwischen -30 und 70 °C und besonders bevorzugt von zwischen 0 und 60 °C aufweist.
14. Polymerzusammensetzung nach Aspekt 12 oder 13, **dadurch gekennzeichnet, dass** die Polymerzusammensetzung eine Viskosität von 5.000 bis 25.000 mPa.s, und bevorzugt von 7.000 bis 21.000 mPa.s gemessen bei 90°C aufweist.
15. Polymerzusammensetzung nach mindestens einem der Aspekte 12 bis 14, **dadurch gekennzeichnet, dass** sie frei von Lösungsmitteln ist.
16. Verwendung der Polymerzusammensetzung nach mindestens einem der Aspekte 12 bis 15 als Klebstoff, Dichtstoff oder Beschichtungsmittel, wobei die Polymerzusammensetzung als einkomponentige Zusammensetzung mit Feuchtigkeit und durch Temperaturerhöhung auf mehr als 100°C aushärtet.
17. Verfahren zur Herstellung einer feuchtigkeitshärtenden Polyurethan-Schmelzklebstoffzusammensetzung umfassend die folgenden Schritte:
   a) Bereitstellen einer Polymerzusammensetzung nach mindestens einem der Aspekte 12 bis 15;
   b) Zugabe von ausreichend Polyisocyanat, um den gewünschten Isocyanatgehalt und Isocyanat-Index zu erzielen, und Polymerisieren unter Anwendung eines Additionspolymerisationsverfahrens;
   c) Optionale Zugabe eines Aminosilans oder eines Mercaptosilans und Umsetzung zu einem silanterminierten Polyurethan.
18. Verfahren nach Aspekt 17, **dadurch gekennzeichnet, dass** das Polyisocyanat im Schritt b) ausgewählt ist aus der Gruppe bestehend aus Ethylendiisocyanat, Ethylidendiisocyanat, Propylendiisocyanat, Butylendiisocyanat, Pentamethylendiisocyanat, Hexamethylendiisocyanat, Toluoldiisocyanat, Cyclopentylen-1,3-diisocyanat, Cyclohexylen-1,4-diisocyanat, Cyclohexylen-1,2-diisocyanat, 4,4'-Diphenylmethan-diisocyanat, 2,4'-Diphenylmethan-diisocyanat, 2,2'-Diphenylmethan-diisocyanat,4,4'-Diisocyanatodicyclohexylmethan, 2,2-Diphenylpropan-4,4'-diisocyanat, p-Phenylen-diisocyanat, m-Phenylen-diisocyanat, Xylylen-diisocyanat, 1,4-Naphthylen-diisocyanat, 1,5-Naphthylen-diisocyanat, Diphenyl-4,4' -diisocyanat, Azobenzol-4,4'-diisocyanat, Diphenylsulfon-4,4'-diisocyanat, Dichlorhexamethylen-diisocyanat, Furfuryliden-diisocyanat, 1-Chlorbenzol-2,4-diisocyanat, 4,4',4"-Triisocyanato-triphenylmethan, 1,3,5-Triisocyanato-benzol, 2,4,6-Triisocyanato-toluol und 4,4'-Dimethyldiphenylmethan-2,2',5,5-tetraisocyanat, 3-Isocyanatmethyl-3,5,5-trimethylcyclohexylisocyanat, 1,3-bis(isocyanatomethyl)benzol, 1,3-bis(isocyanatomethyl)cyclohexan, polymeres Diphenylmethandiisocyanat (PMDI), Block-Diisocyanate und Carbodiimid-modifizierte Polyisocyanate, und Mischungen hiervon.
19. Verfahren nach Aspekt 17 oder 18, **dadurch gekennzeichnet, dass** der freie Isocyanatgehalt zwischen 0 und 20%, bevorzugt zwischen 0 und 15% und besonders bevorzugt zwischen 0 und 10% beträgt.
20. Verfahren nach mindestens einem der Aspekte 17 bis 19, **dadurch gekennzeichnet, dass** der Isocyanat-Index zwischen 0,5 und 10, bevorzugt zwischen 1 und 3 und besonders bevorzugt zwischen 1,5 und 2,5 beträgt.
21. Feuchtigkeitshärtende Polyurethan-Schmelzklebstoffzusammensetzung hergestellt durch ein Verfahren nach mindestens einem der Aspekte 17 bis 20.
22. Feuchtigkeitshärtende Polyurethan-Schmelzklebstoffzusammensetzung nach Aspekt 21, **dadurch gekennzeichnet, dass** die Zusammensetzung eine Viskosität von 10 mPas bis 150.000 mPas bei 120°C aufweist.
23. Verwendung der feuchtigkeitshärtenden Polyurethan-Schmelzklebstoffzusammensetzung nach Aspekt 21 oder 22 als Klebstoff, Dichtstoff oder Beschichtungsmittel.
24. Verfahren zur Herstellung eines 1K-Polyurethanklebstoff umfassend die folgenden Schritte:
   a) Bereitstellen einer Polymerzusammensetzung nach mindestens einem der Aspekte 1 bis 15 wobei anstelle der Temperaturerhöhung im optionalen Schritt b. das Polymerisat auf eine Temperatur von 80 bis 20°C abgekühlt wird;
   b) Zugabe eines Polyisocyanats, um einen gewünschten freien Isocyanatgehalt und gewünschten Isocyanat-Index zu erzielen;
   c) optionales Abkühlen auf eine Temperatur von 80 bis 20 °C für eine Zeitdauer von 0,5 bis 5 Stunden.
25. Verfahren nach Aspekt 24, **dadurch gekennzeichnet, dass** im Schritt b) ein Polyisocyanat gemäß Anspruch 18 verwendet wird, wobei das Polyisocyanat bevorzugt ein Diisocyanat ist.
26. Verfahren nach Aspekt 24 oder 25, **dadurch gekennzeichnet, dass** der freie Isocyanatgehalt zwischen 2 und 40%, bevorzugt zwischen 5 und 30% und besonders bevorzugt zwischen 10 und 20% beträgt.
27. Verfahren nach mindestens einem der Aspekte 24 bis 26, **dadurch gekennzeichnet, dass** der Isocyanat-Index zwischen 1,5 und 20, bevorzugt zwischen 2 und 15 und besonders bevorzugt zwischen 4 und 10 beträgt.
28. 1K-Polyurethanklebstoff hergestellt durch ein Verfahren nach mindestens einem der Aspekte 24 bis 27.
29. 1K-Polyurethanklebstoff nach Aspekt 28, **dadurch gekennzeichnet, dass** der 1K-Polyurethanklebstoff eine Viskosität von 5.000 bis 25.000 mPa.s, und bevorzugt von 6000 bis 21.000 mPa.s aufweist, gemessen bei 90°C.
30. Verwendung eines 1K-Polyurethanklebstoffs nach Aspekt 28 oder 29 als Klebstoff, Beschichtungsmasse oder Dichtstoff, insbesondere als Vielzweck-Klebstoff (Haushalts-Klebstoff), Montage-Klebstoff, Konstruktions-Klebstoff, Papier- und Verpackungs-Klebstoff, Folienkaschierklebstoff, Klebstoff für keramische und metallische Werkstoffe, Holz, Glas, Sandwich-Systeme, Textilien, Armierungsgewebe, Materialien im Bereich Flugzeuge, Militär, oder Schiffsbau.

## Patentansprüche

1. Acrylat-Copolymer, umfassend:
a) 5 bis 95 Gew.-% eines oder mehrerer Acrylatmonomere, die keinen aktiven Wasserstoff enthalten, bevorzugt ausgewählt aus der Gruppe bestehend aus Butylmethacrylat und Methylmethacrylat;
b) 5 bis 95 Gew.-% eines oder mehrerer Acrylatmonomere mit einer Siloxan-Seitengruppe, bevorzugt ein 3-Methacryloxypropyltrimethoxysilan.
